# EUROPÄISCHE PATENTANMELDUNG

(11) **EP 0 896 955 A1**
(43) Veröffentlichungstag der Anmeldung: **17.02.1999**
(21) Anmeldenummer: 98113845.6
(22) Anmeldetag: 24.07.1998
(51) Int. Cl.: C03B 5/235, C03B 5/00, C03B 5/193

(54) **Verfahren und Vorrichtung zur Abreicherung von Metall aus einer Glas- oder Schlackenschmelze**

(30) Priorität: 12.08.1997 CH 1898/97
(71) Anmelder: Von Roll Umwelttechnik AG, 8005 Zürich (CH)
(72) Erfinder: Ungricht, Thomas, 8050 Zürich (CH); Hugentobler, Ernst, 8615 Wermatswil (CH); Kampmann, Ulrike, 8222 Beringen (CH)
(74) Vertreter: Patentanwälte Schaad, Balass, Menzl & Partner AG

(57) **Zusammenfassung**

Das Verfahren zur Abreicherung von Metall aus einer Glas- oder Schlackenschmelze (9), enthaltend Metalloxide und andere Metallverbindungen, verwendet einen fossilen Brennstoff als Reduktions- und Heizmittel, welcher gasförmig oder mittels eines Trägergases fest unter der Schmelzoberfläche (15) direkt in die Schmelze (9) eingeblasen wird.

## Beschreibung

Die Erfindung betrifft ein Verfahren zur Abreicherung von Metall aus einer Glas- oder Schlackenschmelze enthaltend metallische Bestandteile gemäss dem Oberbegriff von Anspruch 1 sowie eine Vorrichtung zur Durchführung des Verfahrens gemäss dem Oberbegriff von Anspruch 13.

In Müllverbrennungsanlagen fallen ungefähr 20 bis 25% der verbrannten Müllmenge als Schlacke an. In dieser Schlacke befinden sich noch etwa 5 bis 10% verschiedene Metalle, hauptsächlich Eisen. Nebst der Schlacke fallen feinere feste Rückstände wie Flug- oder Kesselasche und Filterstaub an. Bei der Weiterverwendung oder Ablagerung dieser Produkte könnten die wasserlöslichen Schwermetallverbindungen zu Problemen, wie zum Beispiel zu einer unzulässigen Belastung der Gewässer führen.

Um dieser Umweltbelastung zu begegnen ist es beispielsweise aus der CH 686764 bekannt, die festen Rückstände aus der Müllverbrennungsanlage durch Einschmelzen in einen glasartigen Zustand zu überführen, und dabei Schwermetalle und sonstige umweltbelastende Stoffe in eine wasserunlösliche Glasmatrix einzubinden.

Aus der genannten Patentschrift ist ein Reduktionselektrodenofen mit einer konduktiven elektrischen Beheizung bekannt, wobei die flüssige Schmelze das elektrische Widerstandsmaterial bildet. Der elektrische Energieeintrag in die Schmelze erfolgt über Kohle- oder Graphitelektroden, welche in die Schmelze eintauchen. Ein Nachteil dieses Reduktionsofens ist darin zu sehen, dass ein Teil der Schwermetalle nicht aus der Glasschmelze abgetrennt und daher in die wasserunlösliche Glasmatrix eingebunden wird. Eine derartig verunreinigte Glasmatrix ist nicht als Baustoff verwendbar. Würde die Glasmatrix zum Beispiel durch Mahlen zu einem Granulat oder einem Pulver weiter verarbeitet, so könnten die in der Glasmatrix vorhandenen Schwermetalle teilweise wieder ausgewaschen werden. Daher wird das gewonnene Glas üblicherweise entsorgt.

Ein weiterer Nachteil des bekannten Verfahrens ist darin zu sehen, dass der Reduktionsofen mit elektrischer Energie zu betreiben ist, was relativ kostenaufwendig ist.

Es ist Aufgabe der vorliegenden Erfindung ein Verfahren sowie eine Vorrichtung zur Abreicherung von in einer Glas- oder Schlackenschmelze enthaltenen metallischen Bestandteilen vorzuschlagen. Das erfindungsgemässe Verfahren sollte zudem wirtschaftlich vorteilhafter betreibbar sein.

Diese Aufgabe wird gelöst mit einem Verfahren aufweisend die Merkmale von Anspruch 1. Die abhängigen Ansprüche 2 bis 11 beziehen sich auf weitere, vorteilhafte Ausgestaltungen des Verfahrens. Die Aufgabe wird weiter gelöst mit einer Vorrichtung aufweisend die Merkmale von Anspruch 12. Die abhängigen Ansprüche 13 bis 17 beziehen sich auf weitere, vorteilhafte Ausgestaltungen der Vorrichtung.

Durch das erfindungsgemässe Verfahren wird zur Abreicherung von Metall aus einer Glas- oder Schlackenschmelze ein brennbares, z.B. fossiles Reduktionsmittel gasförmig oder, mittels eines Trägergases, in fester Form unter der Schmelzoberfläche direkt in die Glas- oder Schlackenschmelze eingeblasen.

Das Reduktionsmittel ist vorzugsweise sauerstoffarm oder sauerstofflos, damit während des Zuführens des Reduktionsmittels keine Reduktion stattfindet sondern erst in der Glas- oder Schlackenschmelze. Somit werden in der Schmelze vorhandene Metall- und Schwermetalloxide in ihre metallische Form reduziert.

Diese Verfahren weist den Vorteil auf, dass das eingeleitete Reduktionsmittel eine Vermischung der Glas- oder Schlackenschmelze bewirkt, so dass das Reduktionsmittel in der Glasschmelze verteilt wird und dadurch eine weitgehende Reduktion der metallischen Bestandteile, insbesondere der oxidischen Metallverbindungen, erzielt wird. In einer Ausführungsform des Verfahrens wird durch das Einblasen des Reduktionsmittels in der Schmelze ein turbulentes Verhalten erzeugt.

Die metallischen Bestandteile in der Glasschmelze bestehen hauptsächlich aus Metalloxiden und anderen Metallverbindungen, die zu reinen Metallen reduziert werden sollen.

In einer vorteilhaften Ausgestaltung des Verfahrens wird die natürliche Konvektion der Glasschmelze durch das in die Glasschmelze eingeblasene Reduktionsmittel verstärkt, was den Eintrag und die Verteilung der durch Wärmestrahlung eingebrachten Energie in die Schmelze erhöht, insbesondere wenn die Wärmequelle über der Schmelzoberfläche angeordnet ist.

In einer vorteilhaften Ausgestaltung des Verfahrens erfolgt das Einbringen des Reduktionsmittels in die Glasschmelze mit einer derartigen Geschwindigkeit, dass eine Rührwirkung erzeugt wird, so dass das Reduktionsmittel in allen Bereichen der Glasschmelze vermischt wird, wodurch eine weitgehend vollständige Reduktion der Metalloxide erzielt wird. Die Verwendung eines fossilen Heizmittels als Reduktionsmittel weist den Vorteil auf, dass das an der Oberfläche der Glasschmelze austretende, überschüssige Reduktionsmittel sowie die Reaktionsprodukte wie Kohlenmonoxid mittels oberhalb der Schmelze angeordneter Lanzen, die entweder mit Sauerstoff, Luft oder einem Gemisch von Luft und Sauerstoff gespiesen werden, entzündet und verbrannt werden. Durch die Nachverbrennung oberhalb der Schmelze wird die erforderliche Energie freigesetzt und in Form von Strahlungswärme auf die Schmelze übertragen. Damit wird einerseits ein Aufheizen der Glasschmelze und andererseits die Aufrechterhaltung der Temperatur der Glasschmelze ermöglicht. Die abgegebene Strahlungswärme ist über die eingeleitete Menge an fossilem Heizmittel regulierbar.

In einer vorteilhaften Ausgestaltung des Verfahrens wird über der Schmelzoberfläche Sauerstoff und/oder Luft zugeführt, wobei die Zufuhr in stöchiometrischer oder unterstöchiometrischer Menge erfolgen kann. Bei einer unterstöchiometrischen Menge hat die vollständige Ausbrennung der verbleibenden brennbaren Anteile in einem nachgeschalteten Verfahrensschritt zu erfolgen.

Ein weiterer Vorteil des erfindungsgemässen Verfahrens ist darin zu sehen, dass auch Heizmittel in minderwertiger Qualität verwendbar ist, wie zum Beispiel schweres Heizöl, das bei Raumtemperatur einen flüssigen Zustand aufweist. Ein derartiges Heizmittel wird vor der Zufuhr in die Glasschmelze erwärmt, so dass es gasförmig zuführbar ist.

Ein weiterer Vorteil des erfindungsgemässen Verfahrens ist darin zu sehen, dass als Folge der mechanischen Wirkung des in die Glasschmelze eingedüsten Reduktionsmittels sowie der insbesondere gleichmässigen Verteilung des Reduktionsmittels die Reduktion an vielen Orten stattfindet. Dies führt zur Ausscheidung kleiner Tröpfchen aus der oxidischen Schmelze über den ganzen Reaktorquerschnitt.

Das erfindungsgemässe Verfahren ist insbesondere geeignet zur Aufbereitung von festen Rückständen aus Müllverbrennungsanlagen, insbesondere Schlacke, wobei die aus der Müllverbrennung anfallende Schlacke zu einer glasartigen Schmelze geschmolzen wird und metallische Bestandteile aus der Schmelze abgetrennt werden. Das erfindungsgemässe Verfahren ist jedoch beispielsweise auch geeignet zum Reinigen von Glasschmelzen beim Recycling von gebrauchtem Glas.

Das Reduktionsmittel ist auch in fester Form, insbesondere als Kohlenstaub, mittels eines inerten Trägergases zuführbar. Als Inertgas eignet sich beispielsweise Stickstoff.

Das erfindungsgemässe Verfahren und die erfindungsgemässe Vorrichtung wird an Hand zweier Ausführungsbeispiele im Detail beschrieben. Es zeigen:
- Fig. 1: ein Längsschnitt durch eine Vorrichtung zur Abreicherung von Metall;
- Fig. 2: ein Querschnitt durch ein weiteres Ausführungsbeispiel einer Vorrichtung zur Abreicherung von Metall.

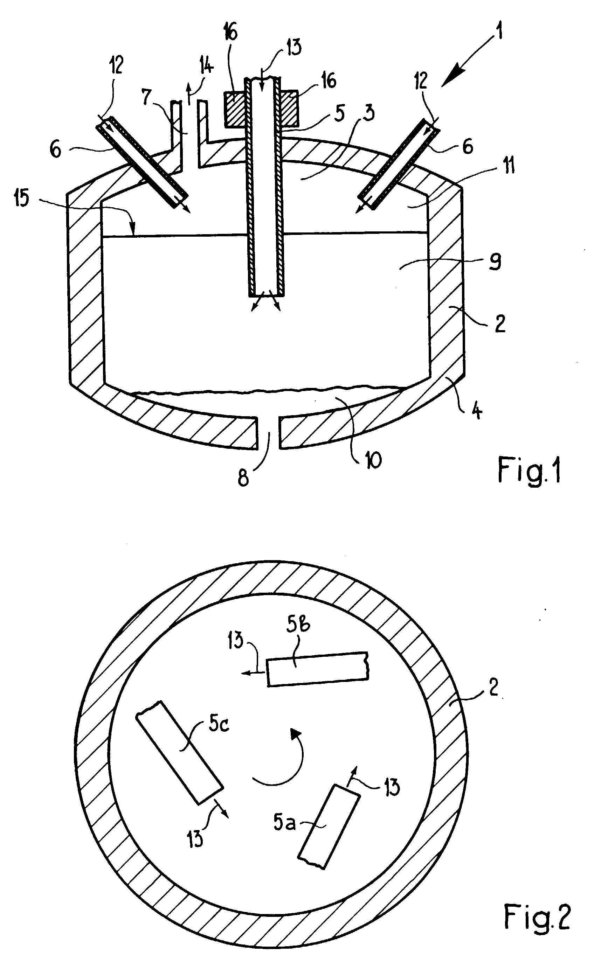

Der Schmelzofen 1 mit Heizkammer 2 weist gemäss Fig. 1 im oberen Teil einen sogenannten Oberofen 3 und im unteren Teil eine Wanne 4 auf. Ein Zuführelement 5 ist bezüglich der Heizkammer 2 zentrisch angeordnet, erstreckt sich in vertikaler Richtung verlaufend durch die Wandung der Heizkammer 2 hindurch und weist im unteren Endabschnitt Auslassöffnungen auf, wobei das als eine Lanze ausgestaltete Zuführelement 5 derart im Innenraum der Heizkammer 2 angeordnet ist, dass die Auslassöffnungen in die Glasschmelze 9 eintauchen. Das Zuführelement 5 ist vorzugsweise als eine Lanze aus feuerfester Keramik oder Graphit ausgebildet. Das Zuführelement 5 könnte bezüglich der Heizkammer 2 auch exzentrisch angeordnet sein, oder es könnten eine Mehrzahl von Zuführelementen 5a,5b,5c vorgesehen sein, wie in Fig. 2 dargestellt. Die Zuführelemente 5,5a,5b,5c dienen zum Zuführen des brennbaren, vorzugsweise sauerstoffarmen oder sauerstofflosen Reduktionsmittels 13.

Im oberen Teilbereich der Heizkammer 2 sind eine oder mehrere von aussen in den Oberofen 3 mündende, als Lanzen ausgebildete, weitere Zuführelemente 6 angeordnet, welche zur Zuführung eines Gasstromes 12, bestehend aus Sauerstoff, Luft oder einem Gemisch von Luft und Sauerstoff, dienen.

Weiter ist im oberen Teilbereich der Heizkammer 2 ein Abgaskanal 7 angeordnet. Die Heizkammer 2 weist an der tiefsten Stelle eine schliessbare Auslassöffnung 8 auf.

Während des Betriebes des Schmelzofens 1 befindet sich im Innern der Heizkammer 2 eine Glasschmelze 9 mit in der Glasschmelze enthaltenen oxidischen Metall- und Schwermetallverbindungen und/oder metallischen Bestandteilen, wobei die reduzierten Metallverbindungen im Bodenbereich der Wanne 4 als metallische Ablagerung 10 beziehungsweise als Metallschmelze anfallen. Die Glasschmelze 9 bildet eine Schmelzoberfläche 15, wobei der sich über der Schmelzoberfläche 15 bildende Raum 11 des Oberofens 3 heisse gasförmige Stoffe aufweist.

Der erfindungsgemässe Schmelzofen 1 wird derart betrieben, dass ein fossiles Heizmittel wie zum Beispiel Erdgas als Reduktionsmittel 13 über das Zuführelement 5 direkt in die Glasschmelze 9 eingeblasen wird. Das Reduktionsmittel 13 sowie die gasförmigen Reaktionsprodukte in der Glasschmelze 9 steigen in Richtung der Schmelzoberfläche 15 auf und unterstützen dabei die natürliche Konvektion der Glasschmelze 9. Das Reduktionsmittel 13 wird vorteilhafterweise derart in die Glasschmelze 9 eingeblasen, dass eine Rührwirkung beziehungsweise ein turbulentes Verhalten in der Glasschmelze 9 erzielt wird. Zur verstärkten Rührwirkung könnten auch mehrere Zuführelemente 5a,5b,5c vorgesehen sein, wie in Fig. 2 dargestellt, welche das Reduktionsmittel 13 an unterschiedlichen Stellen in die Glasschmelze 9 leiten, wobei die Zuführelemente 5a,5b,5c derart ausgerichtet sind, dass durch das ausströmende Reduktionsmittel 13 eine möglichst starke Rührwirkung entsteht, beziehungsweise wie in Fig. 2 dargestellt, die Glasschmelze 9 in Rotation versetzt wird. Die Rührwirkung kann zudem über die zugeführte Menge Reduktionsmittel 13, beziehungsweise über die Geschwindigkeit der Einleitung beeinflusst werden. Durch die Rührwirkung wird das Reduktionsmittel besonders gleichmässig in der Glasschmelze 9 verteilt, so dass eine möglichst vollständige Reduktion der in der Glasschmelze 9 enthaltenen Metalloxide erzielt wird. Über der Schmelzoberfläche 15 wird durch die Zuführelemente 6 Sauerstoff, Luft oder ein Gemisch von Sauerstoff und Luft zugeführt, wodurch das an der Oberfläche der Glasschmelze 9 austretende überschüssige Reduktionsmittel sowie das Reaktionsprodukt CO entzündet wird. Dabei wird Energie in Form von Strahlungswärme freigesetzt, welche zum Aufheizen der Glasschmelze 9 beziehungsweise zur Aufrechterhaltung der Temperatur der Glasschmelze 9 dient. Die als Lanzen ausgebildeten Zuführelemente 6 sind vorzugsweise gleichmässig verteilt über der Schmelzoberfläche 15 angeordnet. Die verbrannten, heissen Gase 14 entweichen über den Abgaskanal 7.

Durch eine Ansteuerung der Zuführmenge und Zuführgeschwindigkeit des Reduktionsmittels 13, des Sauerstoffes, der Luft oder des Gemisches aus Sauerstoff und Luft kann die Rührwirkung, die Reduktion der Metalloxide sowie die Temperatur der Glasschmelze 9 geregelt werden. So kann beispielsweise die Temperatur der Glasschmelze mit einem Sensor überwacht und die Zufuhr von Reduktionsmittel 13 derart gesteuert werden, dass eine vorgegebene Temperatur eingehalten wird. Um die Rührwirkung zu erzeugen und aufrecht zu erhalten ist eine Mindestmenge an zugeführtem Reduktionsmittel 13 erforderlich. Die für den Schmelz- und Reduktionsprozess erforderliche Temperatur liegt beispielsweise im Bereich von 1300°C bis 1500 °C. Dem Schmelzofen 1 könnte zusätzliche Wärmeenergie zugeführt werden durch weitere, nicht dargestellte, ausserhalb oder innerhalb der Heizkammer 2 angeordnete Wärmequellen.

Zum Absetzen der metallischen Ablagerungen 10 ist vorzugsweise eine ruhige Phase mit geringer Rührwirkung erforderlich. Das Absetzen der sich am Boden der Heizkammer 2 ansammelnden metallischen Ablagerungen 10 kann über die Auslassöffnung 8 erfolgen, wobei während des Absetzens die Zufuhr des Reduktionsmittels 13 reduziert oder unterbrochen wird.

Das als Lanze ausgebildete Zuführelement 5 wird während des Betriebs des Schmelzofens 1 ständig verbraucht und über eine in Fig. 1 nur symbolisch dargestellte Nachführvorrichtung 16 automatisch nachgeführt, so dass die Auslassöffnung des Zuführelementes 5 während des Betriebes des Schmelzofens 1 ständig in die Glasschmelze 9 eintaucht. Die Zuführelemente 5 können als im Innern hohle Lanzen ausgestaltet sein. Die Lanzen können beispielsweise aus Keramik oder Graphit bestehen. Eine Lanze aus Keramik weist den Vorteil auf, dass diese selbst ohne Kühlung einen geringen Verschleiss aufweisen und bis zu einer Temperatur von 2000°C betreibbar sind. Eine Lanze kann derart nachgeführt werden, dass auf den sich ausserhalb der Heizkammer 2 befindlichen Abschnitt der Lanze 5 ein zusätzlicher Abschnitt angesetzt wird, so dass die sich in der Heizkammer 2 verbrauchende Lanze 5 von Aussen ständig nachgeführt werden kann. In einer vorteilhaften Ausgestaltung sind mehrere in die Heizkammer 2 ragende Lanzen 5 vorgesehen, so dass ohne Unterbruch des Verfahrens eine Lanze 5 ausser Betrieb gesetzt werden kann, um beispielsweise der Lanze 5 ein neues Teilstück anzusetzen oder die Lanze 5 zu ersetzen. Das durch die Lanze 5 strömende Reduktionsmittel 13 kann die Lanze 5 kühlen und deren Standzeit dadurch erhöhen beziehungsweise deren Verschleiss reduzieren.

Die Heizkammer 2 kann im Bereich des Oberofens 3 als auch im Bereich der Wanne 4 mit derselben Feuerfestauskleidung versehen sein.

Die Einsatzstoffe könnten in flüssiger oder fester Form in den Schmelzofen 1 eingeführt werden. Beim Einsatz von festen Stoffen erfolgt das Einbringen batchweise. Das Einschmelzen kann mittels eines oder mehrerer im Schmelzofen 1 angeordneter Oberbrenner erfolgen. Nach dem Erzeugen einer Schmelze kann das erfindungsgemässe Verfahren ausgeführt werden.

Für eine erhöhte Abreicherung kann es sich als vorteilhaft erweisen, eine oder mehrere Heizkammern hintereinander anzuordnen, so dass eine Rührkesselkaskade ausgebildet wird.

## Patentansprüche

1. Verfahren zur Abreicherung von Metall aus einer Glas- oder Schlackenschmelze (9) enthaltend metallische Bestandteile, dadurch gekennzeichnet, dass ein brennbares Reduktionsmittel (13) unter der Schmelzoberfläche (15) direkt in die Glasschmelze (9) eingeblasen wird, um die metallischen Bestandteile zu reduzieren, und dass das Reduktionsmittel ausserhalb der Schmelze (9) verbrannt wird, um die Schmelze (9) zu beheizen.

2. Verfahren nach Anspruch 1, dadurch gekennzeichnet, dass das Reduktionsmittel (13) gasförmig eingeblasen wird und insbesondere sauerstoffarm oder sauerstofflos ist.

3. Verfahren nach Anspruch 1 oder 2, dadurch gekennzeichnet, dass als Reduktionsmittel (13) ein fossiler Brennstoff in gasförmiger, flüssiger oder fester Form verwendet wird.

4. Verfahren nach Anspruch 1, dadurch gekennzeichnet, dass das Reduktionsmittel (13) in fester Form, insbesondere als Kohlenstaub, mittels eines inerten Trägergases zugeführt wird.

5. Verfahren nach einem der vorhergehenden Ansprüche, dadurch gekennzeichnet, dass das Reduktionsmittel (13) in einer über das Schmelzbadvolumen gleichmässigen Verteilung eingeführt wird.

6. Verfahren nach einem der vorhergehenden Ansprüche, dadurch gekennzeichnet, dass das Reduktionsmittel (13) derart ausgerichtet und/oder mit einer derartigen Geschwindigkeit eingeführt wird, dass in der Schmelze (9) eine Turbulenz und/oder eine Rotation erzielt wird.

7. Verfahren nach einem der vorhergehenden Ansprüche, dadurch gekennzeichnet, dass oberhalb der Schmelze (9) Sauerstoff und/oder Luft zugeführt wird, insbesondere in einer über der Schmelzoberfläche (15) gleichmässigen Verteilung, um das an der Schmelzoberfläche (15) austretende überschüssige Reduktionsmittel sowie das Reaktionsprodukt Kohlenmonoxid oberhalb der Schmelzoberfläche (15) zu verbrennen.

8. Verfahren nach Anspruch 5, dadurch gekennzeichnet, dass der Schmelze (9) ein Überschuss an brennbarem Reduktionsmittel (13) zugeführt wird, und dass über die zugeführte Menge und deren Verbrennung die zugeführte Wärmeenergie geregelt wird.

9. Verfahren nach einem der vorhergehenden Ansprüche, dadurch gekennzeichnet, dass oberhalb der Schmelzoberflache (15) Sauerstoff und/oder Luft in einer stöchiometrischen oder einer unterstöchiometrischen Menge zugeführt wird.

10. Verfahren nach einem der vorhergehenden Ansprüche, dadurch gekennzeichnet, dass beim Auslass des Metalls, insbesondere der Metallschmelze, die Zufuhr des Reduktionsmittels (13) unterbrochen oder reduziert wird.

11. Verfahren nach einem der vorhergehenden Ansprüche, dadurch gekennzeichnet, dass die Schmelze (9) feste Rückstände aus einer Müllverbrennungsanlage beinhaltet.

12. Verfahren nach einem der Ansprüche 1 bis 8, dadurch gekennzeichnet, dass die Schmelze (9) zumindest teilweise aus Recyclingglas besteht.

13. Vorrichtung zur Durchführung des Verfahrens nach einem der Ansprüche 1 bis 12, umfassend eine Heizkammer (2) sowie zumindest ein in die Heizkammer (2) mündendes Zuführelement (5) für das brennbare Reduktionsmittel (13), wobei das Zuführelement (5) derart angeordnet ist, dass es während des Betriebes der Heizkammer (2) in die sich bildende Glasschmelze (9) eintaucht, und wobei das Zuführelement (5) insbesondere als eine Lanze aus feuerfester Keramik oder Graphit ausgebildet ist.

14. Vorrichtung nach Anspruch 13, dadurch gekennzeichnet, dass eine Nachführvorrichtung (16) zum Nachsetzen der Lanze vorgesehen ist, um die sich während des Betriebes verbrauchende Lanze automatisch zur Schmelze (9) hin nachzuführen.

15. Vorrichtung nach einem der vorhergehenden Ansprüche, dadurch gekennzeichnet, dass die Heizkammer (2) einen Oberofen (3) und eine Wanne (4) aufweist, und dass eine Mehrzahl von Zuführelementen (6) für Sauerstoff oder Luft in den Oberofen (3) münden, wobei die Austrittsöffnungen der Zuführelemente (6) insbesondere gleichmässig verteilt angeordnet sind.

16. Vorrichtung nach Anspruch 15, dadurch gekennzeichnet, dass sowohl die Wanne (4) als auch der Oberofen (3) dieselbe Feuerfestauskleidung aufweisen.

17. Müllverbrennungsanlage oder Recyclinganlage umfassend eine Vorrichtung nach einem der Ansprüche 13 bis 16.
